# EUROPEAN PATENT APPLICATION

(11) **EP 1 369 783 A2**
(43) Date of publication of application: **10.12.2003**
(21) Application number: 03011508.3
(22) Date of filing: 21.05.2003
(51) Int. Cl.: G06F 9/46

(54) **Hardware abstraction interfacing system and method**

(30) Priority: 07.06.2002 US 164752
(71) Applicant: ALCATEL, 75008 Paris (FR)
(72) Inventor: Twidale, Jamie, Petaluma, CA 94954 (US); Recuero, Jose Carlos, Rohnert Park, CA 94928 (US)
(74) Representative: Dreiss, Fuhlendorf, Steimle & Becker

(57) **Abstract**

A hardware abstraction interfacing system and method for providing an interface between hardware and application software in equipment having a layered architecture. The interfacing system includes a hardware profile structure having a plurality of hardware profile entities which correspond to the particular hardware components of the hardware. Each hardware profile entity includes address information and masking information for the corresponding hardware component. A searchable data structure stores a set of functional profile entities which include a reference that points to the address information of at least one of the hardware profile entities and a function supported by one or more hardware components. A profile engine is able to search the searchable data structure for a particular function called by the application software.

## Description

### BACKGROUND OF THE INVENTION

### Technical Field of the Invention

The present invention relates to architecture schemes in equipment having a layered hardware, software and application interface hierarchy. More particularly, and not by way of limitation, the present invention relates to a hardware abstraction interfacing system and method for providing an interface between hardware and application software in equipment such as, e.g., a network element.

### Description of Related Art

Without limiting the scope of the present invention, its background will be described with reference to Next Generation Networks (NGNs), as an example. The telecommunications industry is developing NGNs that employ packets and Voice over Internet Protocol (VoIP) technology to move both voice and data. In the past, voice and data were transported on separate networks for several reasons including subscribers' expectation of high quality voice service. Today, high quality voice transmission is possible over data networks, so the justification for separate voice and data networks no longer exists. The move towards converging voice and data has multiple catalysts. Today's telecommunication networks must generate new sources of revenue, offer flexible multimedia services to private subscribers, and handle the enormous growth of these services, all while keeping operational expenses at a reasonable level.

An NGN that achieves convergence includes a core packet network for data transport. The core packet network is supported by Media Gateways (MGs) that provide interfaces to the Public Switched Telephone Network (PSTN) as well as to subscribers and Internet Service Providers (ISPs). Softswitches are employed to provide call and service control. The fundamental network and service management requirements of the NGN include subscriber data, service, and network provisioning, network element maintenance, and network performance control.

While flexible and competitive solutions are being developed to build and deploy NGNs, the maintenance of existing network elements is not without limitations, however. Network elements, much like any sophisticated electronic equipment operating under stored program control and having a layered hardware, software and application interface hierarchy, include application software designed to run on a particular hardware platform. During the operation of the network element, the hardware platform may have to be modified for routine maintenance and upgrades. Due to the limitations of the architecture of the existing network elements, extensive adaption to the application software is generally required for each modification made to the hardware platform, thereby causing significant downtime and associated economic loss.

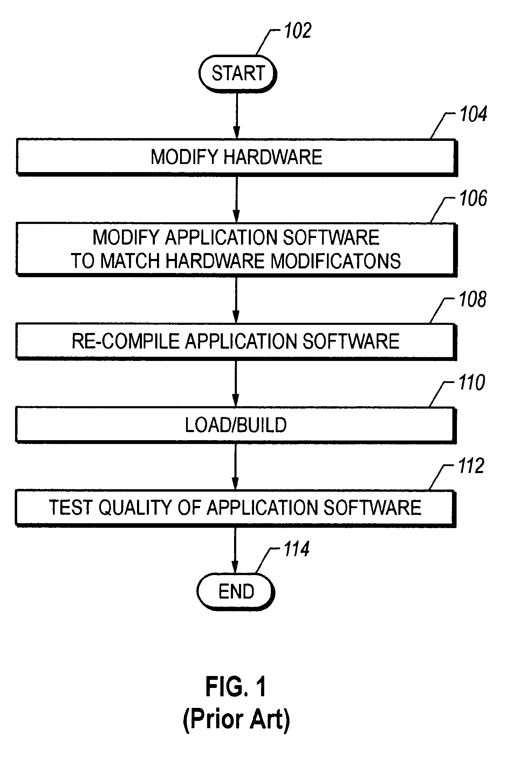

FIG. 1 depicts a flow chart illustrating a typical method of modifying a hardware configuration in an existing network element. At step 102, the method begins when a hardware modification is necessary. At step 104, the hardware platform of the network element is modified. This modification may be updating an existing hardware component, inserting a new hardware component, or deleting an existing hardware component. At step 106, the application software must be modified to match the hardware modification or modifications performed at step 104. Variables and symbolic constants within the software are changed to match and reflect the modifications made to the hardware. These changes are modifications to the application software, thereby necessitating a re-compile. At step 108, the application software is re-compiled. At step 110, the software is loaded and built. The high level modifications to the variables and symbolic constants of the software instructions are translated into machine language so that the processor hardware may execute the software instructions. At step 112, the software undergoes quality tests. The quality tests entail multiple test cycles to ensure the continuing quality and performance of the software. At step 114, the installation of the hardware is complete and the modified hardware and associated application software may then be provisioned for online network use.

It should be apparent that the existing network elements are not readily amenable to changes in the configuration of the hardware platform without significant drawbacks and deficiencies. The necessary re-compiling, loading, and building of the network element application software represents substantial operational expense in the maintenance of the network element.

Therefore, a need exists for a system and method operable within any equipment having a layered architecture for reacting to changes in system hardware without having to modify and reset the system and application software. A need also exists for such a system and method to provide modified software with fewer defects. Moreover, a need exists for such a system and method to allow efficient hardware modifications without unreasonable operational expense.

### SUMMARY OF THE INVENTION

Accordingly, the present invention advantageously provides a hardware abstraction interfacing scheme for providing an interface between hardware and application software in any equipment. The hardware abstraction interfacing scheme provides a system and method for modifying the hardware configuration of the equipment without having to reset the system. As a consequence, the interfacing scheme of the present invention provides greater functionality while minimizing operational expense and system downtime.

In one aspect, the present invention is directed to a hardware abstraction interfacing system for providing an interface between hardware and application software in an equipment. The interfacing system includes a hardware profile structure having multiple hardware profile entities, wherein each hardware profile entity includes address information and masking information associated with a corresponding hardware component. A searchable data structure operable to store a set of functional profile entities is provided. Each functional profile entity includes a reference that points to address information of at least one of the hardware profile entities and a function supported by one or more hardware profile entities. A profile engine is operable to search the searchable data structure for a particular function called by the application software.

In one embodiment, the profile engine is operable to modify the hardware profile entities based on the hardware components being modified. The hardware components being modified may be the result of an updated hardware component, hardware component insertion, or hardware component deletion. The profile engine is operable to modify the functional profile entities based on the hardware profile entities being modified. The profile engine is able to detect hardware modifications.

In one exemplary configuration, the hardware abstraction interfacing system of the present invention accepts Application Programming Interface (API) calls from the application software and employs the masking information to mask the physical address information of a hardware component from the application software. In particular, the profile engine may communicate with a Field Programmable Gate Array (FPGA) or Application Specific Integrated Circuit (ASIC) of a Board Support Package (BSP) and mask physical address information of the FPGA or ASIC from the application software.

In another aspect, the present invention is directed to a method for providing an interface between hardware and application software in an equipment. The method includes the step of maintaining a hardware profile structure having a plurality of hardware profile entities. Each hardware entity includes address information and masking information for a corresponding hardware component. The method also includes maintaining a searchable data structure operable to store a set of functional profile entities. Each functional profile entity further includes a particular function supported by one or more hardware profile entities. The method also provides that when a hardware-based modification in the equipment takes place, the hardware profile structure and searchable data structure are appropriately updated.

In yet another aspect, the present invention is directed to a hardware abstraction interfacing system for providing an interface between hardware and application software in an equipment that includes means for storing hardware profile entities of each hardware component. Each hardware profile entity includes the address information and masking information associated with a corresponding hardware component. Means for assigning functional profile entities to the hardware is included. Each functional profile entity includes a particular function supported by one or more hardware components and a reference pointing to address information of at least one hardware profile entity. The hardware abstraction interfacing system further includes means for storing the functional profile entities in a searchable database structure.

### BRIEF DESCRIPTION OF THE DRAWINGS

The accompanying drawings are incorporated into and form a part of the specification to illustrate the presently preferred exemplary embodiments of the present invention. Various advantages and features of the invention will be understood from the following Detailed Description taken in connection with the appended claims and with reference to the attached drawing figures in which:

FIG. 1 (Prior Art) depicts a flow chart illustrating a conventional method for modifying the hardware configuration of an existing network element;

FIG. 2 depicts a functional block diagram of an exemplary equipment such as a network element that employs the hardware abstraction interfacing system of the present invention;

FIG. 3 depicts a functional block diagram of an exemplary embodiment of the hardware abstraction interfacing system of the present invention;

FIG. 4 depicts a flow chart illustrating an exemplary method of the present invention for executing an Application Programming Interface (API) call within a network element employing the hardware abstraction interfacing system of the present invention;

FIG. 5 depicts a functional block diagram of a network element wherein an API is shown executing a call to hardware in accordance with the teachings of the present invention;

FIG. 6 depicts a flow chart illustrating an exemplary method of the present invention for modifying the hardware configuration of a network element employing the hardware abstraction interface of the present invention; and

FIG. 7 depicts a functional block diagram of a network element of the present invention wherein a hardware modification is effectuated in accordance with the teachings of the present invention.

### DETAILED DESCRIPTION OF THE DRAWINGS

Preferred embodiments of the invention will now be described with reference to various examples of how the invention can best be made and used. Like reference numerals are used throughout the description and several views of the drawings to indicate like or corresponding parts, wherein the various elements are not necessarily drawn to scale.

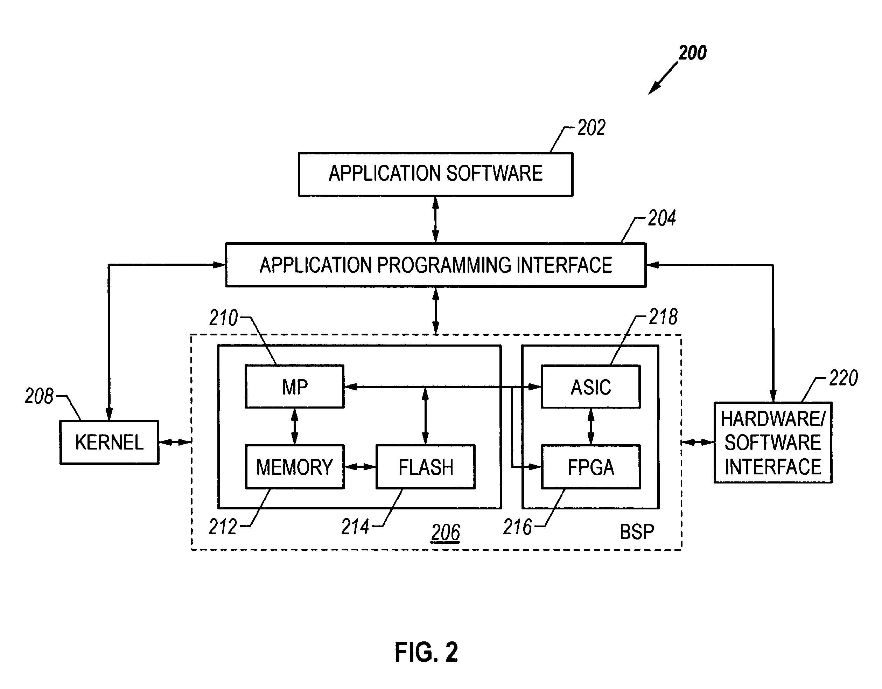

Referring now to the drawings, and more particularly to FIG. 2, depicted therein is an exemplary equipment with layered architecture such as a network element 200, wherein the teachings of the present invention may be advantageously practiced for providing an interface between hardware and application software that overcomes the drawbacks and shortcomings of the prior art. As alluded to hereinabove, the exemplary network element 200 which employs the hardware interfacing system of the present invention comprises a layered architecture. The layers from top to bottom are application software 202, Application Programming Interface (API) 204, and a hardware layer represented by a Board Support Package (BSP) 206. The application software 202 comprises the high level instructions to operate the hardware components that comprise the BSP 206. The API 204 comprises the detailed instructions that the application software 204 uses to request and carry out lower-level services performed by the BSP 206. The set of instructions includes a set of standard software interrupts, calls, and data formats the API 204 employs to initiate contact with the hardware to obtain, for example, network services or program-to-program communications.

In this layered architecture, a kernel 208 and the BSP 206 are positioned at the core. The kernel 208 is the core of the operating system that contains the system-level commands and other functions which may be hidden from users. The BSP 206 includes various hardware components electrically interconnected by multiple buses. A MicroProcessor (:P) 210, memory 212, and flash memory 214 are employed for information storage. It should be understood by those skilled in the art that memory comes in may variations and any combination of volatile and nonvolatile memory is within the teachings of the present invention.

The hardware employed by the BSP 206 includes a Field Programmable Gate Array (FPGA) 216 and an Application-Specific Integrated Circuit (ASIC) 218. The FPGA 216 may be any user-configurable logic device. The FPGA 216 may take the form of a variety of devices which contain memory that holds user-defined logic constructs and interconnects. FPGAs may include, for example, Electrically Erasable Programmable Read Only Memory (EEPROM or E²PROM), Erasable Programmable Read Only Memory (EPROM), Flash EPROM, Static Random Access Memory (SRAM), fuse elements, anti-fuse elements, registers, software pseudo-registers, and similar components. The specific type of FPGA 216 employed determines whether the configuration data is maintained when power is removed (EEPROM, EPROM, FLASH, fuse, anti-fuse, and the like) or whether the configuration data must be reloaded during power-on (SRAM versions). The FPGA 216 may also include various types of signal compatibility and preconfigured logic. The ASIC 218 may be any chipset or chip, including a microprocessor, for example, that is custom-designed for a particular purpose or designed to perform multiple, generalized tasks.

A hardware software interface (HSI) 220 provides an interface between the hardware and software layers of the network element. The HSI 220 is an isolation layer that masks, or abstracts the physical addresses and differences of the hardware components from the higher software levels of the network element 200. The HSI 220 removes the need to specifically tailor the application software 202 to the hardware on which it is executed. Therefore, any address modification to the hardware is transparent to the API 204 and application software 202.

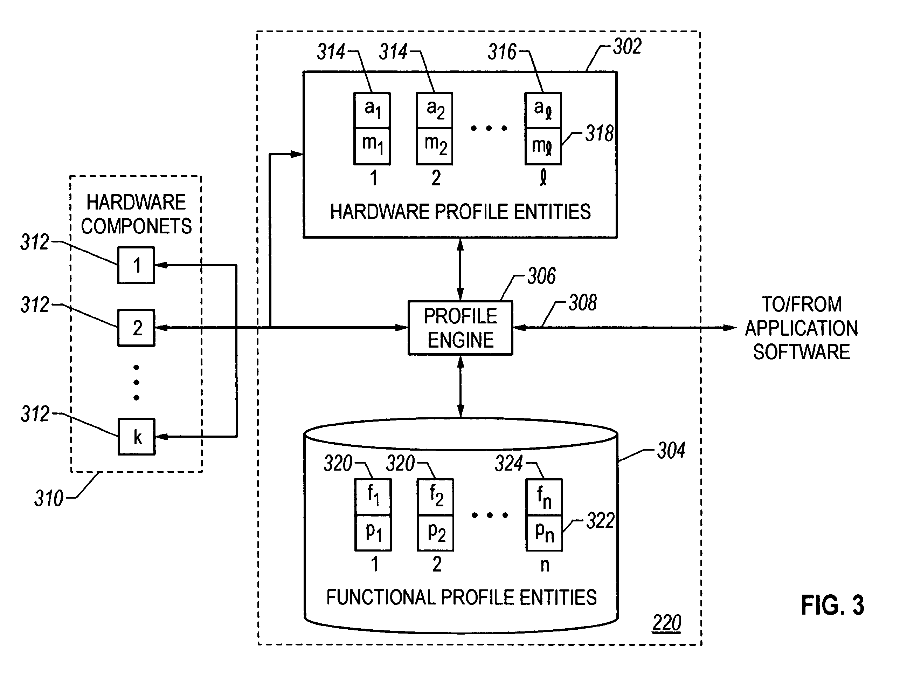

FIG. 3 depicts an exemplary embodiment of the HSI 220 of the hardware abstraction interfacing system of the present invention in additional detail. The HSI 220 includes a hardware profile structure 302, a searchable data structure 304, and profile engine 306. The HSI 220 interfaces with the software layer, i.e., the API and application software via interface 308 and the hardware layer which is illustrated as a hardware platform 310. The hardware platform 310 includes various hardware components 312 such as, for example, the FPGA and ASIC of FIG. 2. It should be understood by those skilled in the art that the particular hardware components enumerated are by way of example and not by way of limitation. For example, the hardware platform may include various firmware elements in addition to the FPGA and ASIC hardware components enumerated. As illustrated in this FIG., the hardware platform 310 includes k hardware components 312 which are marked 1 ... *k*.

The hardware profile structure 302 includes multiple hardware profile entities 314 marked 1 ... *l*. Each hardware profile entity 314 corresponds to a particular hardware component 312. Each hardware profile entity 314 includes address information 316 labeled aᵢ and masking information 318 labeled mᵢ associated with a corresponding hardware component 312. For example, hardware profile entity 1 includes address information a₁ and masking information m₁ that corresponds with a particular hardware component, hardware component 1. The creation and maintenance of the hardware profile entities 314 in the hardware profile structure 302 will be discussed in more detail below. The hardware profile structure 302 may be software, hardware, firmware, or any combination thereof. Preferably, the hardware profile structure 302 includes a nonvolatile memory component such as EEPROM, EPROM, or Flash memory.

The searchable data structure 304 stores a set of functional profile entities 320 marked 1 ... *n*. Each entity 320 includes a reference 322 marked pⱼ that points to the address information 316 of at least one of the hardware profile entities 314 and a function 324 labeled fⱼ supported by one or more hardware profile entities 314 and, in turn, at least one hardware component 312. For example, functional profile entity 1 includes reference p₁ that points to the address information 316 of at least one hardware profile entity 314 located at the hardware profile structure 302. Functional profile entity 1 also includes function f₁ which is supported by hardware profile entity 1 and hardware component 1. The creation and maintenance of the functional profile entities 320 will be described in more detail below. The searchable data structure 304 may be any combination of software, hardware and firmware, and may be termed as a functional profile structure for purposes of the present invention. Preferably, the searchable data structure 304 includes a nonvolatile memory component such as EEPROM, EPROM, or Flash memory.

The profile engine 306 communicates with hardware platform 310, the application software layer, i.e., the application software and the API, the hardware profile structure 302, and searchable data structure 304. The profile engine 306 is able to search the searchable data structure 304 for a particular function called by the application software. Additionally, the profile engine is operable to modify the hardware profile entities 314 at hardware profile structure 302 based on the hardware components 310 being modified. The modification to the hardware components 312 may occur through maintenance or upgrade and may include an updated, inserted, or deleted hardware component 312.

The profile engine 306 is also able to modify the functional profile entities 320 stored in the searchable data structure 304. The functional profile entities 320 may require modification when a modification is made to one or more hardware components 312. The functionality of the profile engine will be discussed in more detail below.

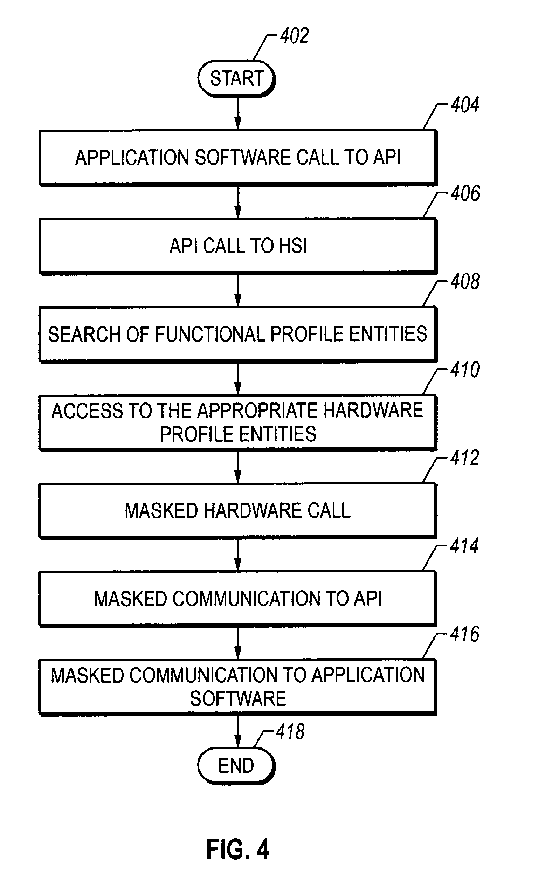

FIG. 4 depicts a flow chart illustrating an exemplary method 400 for executing an API call within a network element employing the hardware abstraction interfacing system of the present invention. At step 402, the method begins by the application software running a routine. At step 404, the application software places a call to the API to execute at least a portion of the routine that involves hardware functionality. The API in turn calls the HSI. Within the HSI, at step 408, the profile engine searches the searchable data structure for the functional profile entities having the function or functions necessary to execute the call.

At step 410, once the requisite functions are found, the appropriate hardware profile entities are accessed by the references in the functional profile entities that have the necessary function or functions. The hardware profile entities include the addressing information and masking information for the hardware component necessary to complete the call.

At step 412, using the addressing information and masking information in the hardware profile entities, the call is directed to the appropriate hardware component. At step 414, a masked communication is placed to the API to complete the call. At step 416, a masked communication is placed from the API to the application software and at step 418, the method is complete.

The hardware profile structure and searchable data structure may take a variety of forms, such as a database comprising tables. Preferably the structures employ a Standard Generalized Markup Language (SGML) or, more preferably, an extensible Markup Language (XML). XML allows programmers to create customized tags or labels to provide functionality not available in other languages. XML automatically generates the required variables to represent the functionality of the hardware components. Therefore, as modifications are made to the hardware components, only the contents of the XML variables, i.e., the tables of the hardware profile structure and the searchable data structure are changed. Therefore, the application software does not have to be changed. Additionally, the hardware component information such as physical address information and masking information is automatically generated. Thus, by bypassing the step of manually changing variables and symbolic constants within the software to match and reflect the modifications made to the hardware, the reliability of the system is greatly increased.

An additional benefit of XML is the XML extension eXensible Stylesheet Language (XSL) which provides for the automatic generation of source code and documentation, and the automatic transformation of XML-based data into a variety of presentable formats. It should be understood by those skilled in the art that although the present invention is being described as employing XML, any computer language with the functionality required by the present invention is acceptable.

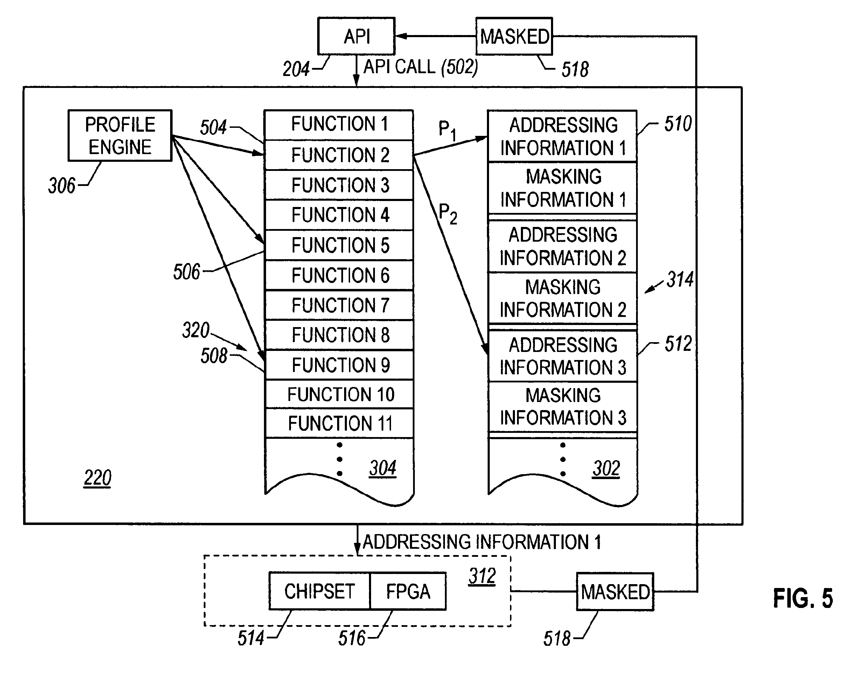

FIG. 5 depicts a functional block diagram that highlights the structural interactions associated with the API call set forth above. As illustrated, the HSI 220 is provided with the table-driven XML software described in detail hereinabove. More specifically, the API places a call 502. The call may be an action to execute a series of instructions. Alternatively, the call may be a primitive, such as a peek or poke, that includes instructions to view and alter a byte of memory. In general, the call is an abstract representation of an interaction between the software and hardware layers across the HSI 220.

Once the HSI 220 receives the call, the profile engine 306 searches the searchable database structure 304 for the functional profile entity or entities 320 that contain the function or functions necessary to execute the call. Each function represents one task or feature that a hardware component can accomplish. For example, as illustrated in FIG. 5, the profile engine 306 has searched the searchable database structure and determined functional profile entity 504, functional profile entity 506, and functional profile entity 508 contain Function 2, Function 5, and Function 9, respectively, which are necessary to execute the call 502. Functional profile entity 504, which includes Function 2, refers to the location of hardware profile entity 510 and hardware profile entity 512 in the hardware profile structure 302 via references p₁ and p₂. Hardware profile entity 510 includes addressing information 1 and masking information 1 and hardware profile entity 2 includes addressing information 3 and masking information 3. Addressing information 1 contains the physical address of the chipset 514 and FPGA 516 at hardware component 312 required to execute the call from the software layer.

Using the addressing information, the profile engine 306 directs the call to chipset 514 and FPGA 516. The masking information 1 is used to mask the content of the physical address of the hardware component from the software layer. Masked communication 518 is returned to API 204. In this manner, the application software is not burdened with differentiating the various hardware components. By masking the content of the physical address information from the application software, the need for the application software to be specifically tailored to the hardware platform of the network element is obviated. FIG. 5 depicts only a portion of the API call 502 being executed, one skilled in the art should understand that Function 5 and Function 9 are also executed.

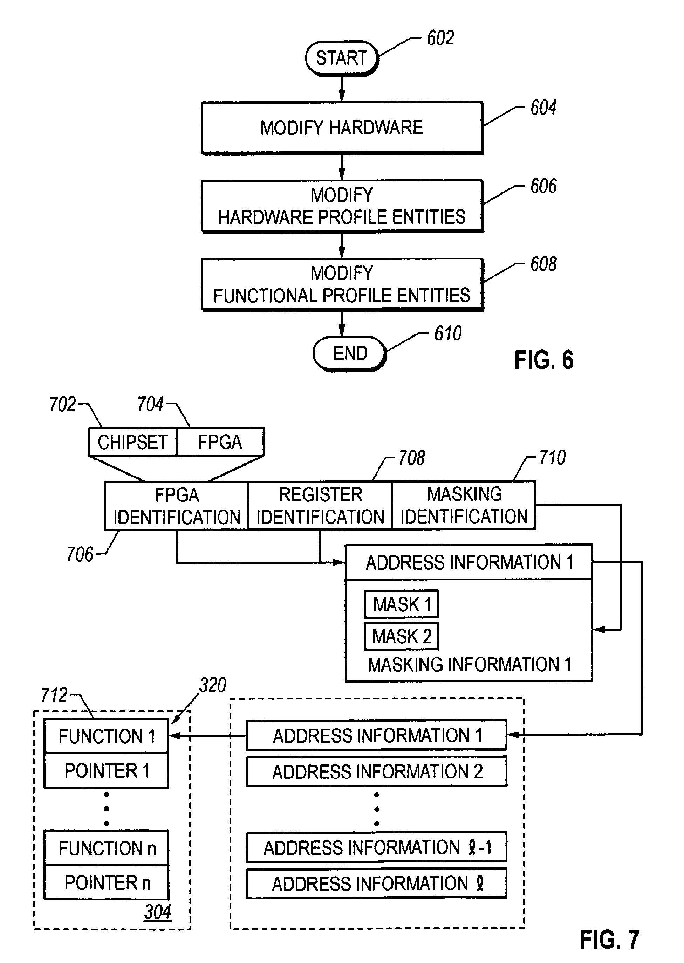

FIG. 6 depicts a flow chart illustrating an exemplary method 600 for modifying the hardware configuration of an equipment element employing the hardware abstraction interface of the present invention. At step 602, the method begins and at step 604, a modification is made to the hardware of the network element. This modification may be the result of routine maintenance or part of an upgrade. As alluded to in the foregoing, the modification may involve replacing a hardware component, inserting a new hardware component, deleting an existing hardware component, or any combination thereof. At step 606, the profile engine modifies the hardware profile entities. Preferably, the profile engine detects the hardware modification and automatically makes any required modifications. At step 608, the profile engine modifies the functional profile entities. At step 610, the method is completed without the need for re-compiling the software, loading, building and/or any other of the various compliance-testing procedures associated with the existing equipment modification methodologies.

FIG. 7 depicts a functional block diagram that illustrates a hardware modification in accordance with the teachings of the present invention. Chipset 702 and FPGA 704 are inserted into the hardware configuration of the network element. The chipset 702 and FPGA 704 includes FPGA identification 706, register identification 708, and masking identification 710. The FPGA identification information 706 and register identification 708 are physical address information about the new hardware component.

The profile engine uses the FPGA identification 706 and register identification 708 to create address information 1. The profile engine uses the masking identification to create masking information 1 which includes mask 1 and mask 2. The profile engine stores this information as a hardware profile entity 314 in the hardware profile structure.

The profile engine uses the new address information, address information 1, with other address information (address information 2 ... *l*) to create a new functional profile entity 320 for the new chipset 702 and FPGA 704. The new functional profile entity, functional profile entity 712, includes function 1 and pointer 1 which points to the location of address information 1 and masking information 1 in the hardware profile structure. It should be understood by one skilled in the art that although the addition of new hardware was described in detail, the upgrading or deletion of existing hardware is similar.

The hardware abstraction interface described herein removes the need to specifically tailor application software to the hardware with which it communicates. This is accomplished by employing a hardware/software interface that masks or abstracts the physical addresses and differences of the hardware components. Accordingly, this system overcomes the limitations of the prior art by providing a hardware modification scheme that allows equipment to maximize uptime even during or after a change to the hardware configuration.

Although the invention has been described with reference to certain exemplary embodiments, it is to be understood that the forms of the invention shown and described are to be treated as presently preferred exemplary embodiments only. Various changes, substitutions and modifications can be realized without departing from the spirit and scope of the invention as defined by the appended claims.

## Claims

1. A hardware abstraction interfacing system for providing an interface between hardware and application software in an equipment, comprising:
a hardware profile structure having a plurality of hardware profile entities, each corresponding to a particular hardware component, wherein a hardware profile entity includes address information and masking information associated with a corresponding hardware component;
a searchable data structure operable to store a set of functional profile entities, each including a reference that points to address information of at least one of said hardware profile entities, wherein each functional profile entity further includes a particular function supported by one or more hardware profile entities; and
a profile engine operable to search said searchable data structure for a particular function called by said application software.

2. The hardware abstraction interfacing system as recited in claim 1 wherein said profile engine is operable to modify said hardware profile entities based on said hardware components being modified.

3. The hardware abstraction interfacing system as recited in claim 2 wherein said hardware components being modified include at least one updated hardware component.

4. The hardware abstraction interfacing system as recited in claim 2 wherein said hardware components being modified include at least one new hardware component.

5. The hardware abstraction interfacing system as recited in claim 2 wherein said profile engine is operable to modify said functional profile entities based on said hardware profile entities being modified.

6. The hardware abstraction interfacing system as recited in claim 5 wherein said modification to said functional profile entities includes upgrading at least one functional profile entity.

7. The hardware abstraction interfacing system as recited in claim 5 wherein said modification to said hardware profile entities includes a hardware insertion.

8. The hardware abstraction interfacing system as recited in claim 5 wherein said modification to said hardware profile entities includes a hardware deletion.

9. The hardware abstraction interfacing system as recited in claim 5 wherein said profile engine is operable to detect a modification in said hardware components.

10. The hardware abstraction interfacing system as recited in claim 9 wherein said modification in said hardware components includes updating a hardware component.

11. The hardware abstraction interfacing system as recited in claim 9 wherein said modification in said hardware components includes adding a new hardware component.

12. The hardware abstraction interfacing system as recited in claim 9 wherein said modification in said hardware includes deleting an existing hardware component.

13. The hardware abstraction interfacing system as recited in claim 1 wherein said profile engine is operable to accept application programming interface calls from said application software.

14. The hardware abstraction interfacing system as recited in claim 13 wherein said profile engine employs said masking information to mask physical address information of said particular hardware component from said application software.

15. The hardware abstraction interfacing system as recited in claim 14 wherein said profile engine is operable to communicate with a Board Support Package (BSP) of said hardware.

16. The hardware abstraction interfacing system as recited in claim 15 wherein said BSP includes a Field Programmable Gate Array (FPGA).

17. The hardware abstraction interfacing system as recited in claim 15 wherein said BSP includes an Application Specific Integrated Circuit (ASIC).

18. A hardware modification method by way of providing an interface between hardware and application software in an equipment, comprising the steps of:
maintaining a hardware profile structure having a plurality of hardware profile entities, each corresponding to a particular hardware component, wherein a hardware profile entity includes address information and masking information associated with a corresponding hardware component;
maintaining a searchable data structure operable to store a set of functional profile entities, wherein each functional profile entity includes a particular function supported by one or more hardware profile entities; and
updating said hardware profile structure and said searchable data structure by a profile engine when a hardware-based modification takes place in said equipment.

19. The method as recited in claim 18, wherein said hardware-based modification comprises inserting a new hardware component.

20. The method as recited in claim 18, wherein said hardware-based modification comprises deleting a particular hardware component.

21. The method as recited in claim 18, wherein said hardware-based modification comprises upgrading a particular hardware component.
